# EUROPEAN PATENT APPLICATION

(11) **EP 4 621 720 A1**
(43) Date of publication of application: **24.09.2025**
(21) Application number: 24787789.7
(22) Date of filing: 31.01.2024
(51) Int. Cl.: G06T 15/06

(54) **RAY TRACING METHOD AND APPARATUS, COMPUTER DEVICE, STORAGE MEDIUM, AND COMPUTER PROGRAM PRODUCT**

(30) Priority: 13.04.2023 CN 202310393666
(71) Applicant: Tencent Technology (Shenzhen) Company Limited, Shenzhen, Guangdong 518057 (CN)
(72) Inventor: NING, Xiaolong, Shenzhen, Guangdong 518057 (CN); XU, Liming, Shenzhen, Guangdong 518057 (CN); PAN, Xiaoyu, Shenzhen, Guangdong 518057 (CN); LI, Yuanheng, Shenzhen, Guangdong 518057 (CN)
(74) Representative: Nederlandsch Octrooibureau
(86) International application number: PCT/CN2024/075049
(87) International publication number: WO 2024/212683

(57) **Abstract**

The present application discloses a ray tracing method and apparatus, a computer device, a storage medium, and a computer program product. The method comprises: acquiring an information map of a virtual scene, wherein full-view depth information of the virtual scene is recorded in the information map, and the full-view depth information comprises a depth value of each virtual object in the virtual scene; in the virtual scene and on the basis of a reference point, generating a tracing ray used for ray tracing, wherein the reference point is a position where the virtual object having a ray tracing requirement is located in the virtual scene; projecting the tracing ray from the virtual scene to the information map to obtain a travel path of the tracing ray on the information map; and on the information map, performing ray tracing along the travel path to obtain a ray tracing result.

## Description

### RELATED APPLICATION

This application is proposed based on Chinese Patent Application No. 202310393666.7 filed on April 13, 2023, and claims priority to the Chinese Patent Application, which is incorporated herein by reference in its entirety.

### FIELD OF THE TECHNOLOGY

The present disclosure relates to the field of computer technologies, and relates to, but is not limited to, a ray tracing method and apparatus, a computer device, a storage medium, and a computer program product.

### BACKGROUND OF THE DISCLOSURE

With the development of computer graphics technologies, ray tracing technology has been widely applied to products such as games, animations, and films and television dramas. Ray tracing technology is a rendering algorithm in computer graphics. The ray tracing technology is specifically projecting a ray to a scene from a point and tracing the ray to determine whether the ray intersects with an object in the scene.

In the related art, a commonly used real-time ray tracing method is a screen space ray tracing method. The method is intended to simulate a ray tracing process through ray stepping in a screen space. Specifically, a plurality of rays are emitted from each pixel point in the screen space, and ray stepping is performed on each ray based on depth information in the screen space, to test an intersection state of each ray to implement ray tracing.

However, during the ray tracing through the method in the related art, only depth information in a current screen space exists, and depth information outside a screen cannot be obtained. Therefore, if a ray travels to a region outside the screen, the ray cannot be traced. In this case, a ray tracing result of the ray is directly regarded as not hitting a valid surface. Therefore, the ray tracing method in the related art cannot obtain an accurate ray tracing result, and has a relatively large limitation.

### SUMMARY

Embodiments of the present disclosure provide a ray tracing method and apparatus, a computer device, a storage medium, and a computer program product, which can improve accuracy of ray tracing.

An embodiment of the present disclosure provides a ray tracing method, the method including: obtaining an information map of a virtual scene, depth information of the virtual scene being recorded in the information map, the depth information including a depth value of each virtual object in the virtual scene; generating, in the virtual scene, a tracing ray configured for ray tracing based on a reference point, the reference point being a position of a virtual object having a ray tracing demand in the virtual scene, projecting the tracing ray from the virtual scene to the information map, to obtain a travel path of the tracing ray on the information map; and performing ray tracing on the information map along the travel path, to obtain a ray tracing result.

An embodiment of the present disclosure provides a ray tracing apparatus, the apparatus including: an obtaining unit, configured to obtain an information map of a virtual scene, depth information of the virtual scene being recorded in the information map, the depth information including a depth value of each virtual object in the virtual scene; and a processing unit, configured to generate, in the virtual scene, a tracing ray configured for ray tracing based on a reference point, the reference point being a position of a virtual object having a ray tracing demand in the virtual scene. The processing unit is further configured to project the tracing ray from the virtual scene to the information map, to obtain a travel path of the tracing ray on the information map. The processing unit is further configured to perform ray tracing on the information map along the travel path, to obtain a ray tracing result.

An embodiment of the present disclosure further provides a computer device, including an input interface and an output interface, the computer device further including a processor and a computer storage medium. The processor is configured to execute one or more instructions, the computer storage medium having one or more instructions stored therein, the one or more instructions being configured to be loaded and executed by the processor to perform the foregoing ray tracing method.

An embodiment of the present disclosure further provides a computer storage medium, having one or more instructions stored therein, the one or more instructions being configured to be loaded and executed by a processor to perform the foregoing ray tracing method.

An embodiment of the present disclosure further provides a computer program product, including a computer program, the computer program, when executed by the processor, implementing the foregoing ray tracing method.

In this embodiment of the present disclosure, the information map in which the depth information (i.e., full-view depth information) of the virtual scene is recorded is obtained, and the tracing ray configured for ray tracing in the virtual scene is projected from the virtual scene to the information map, to obtain the travel path of the tracing ray on the information map, and the ray tracing is performed on the information map along the travel path. In this way, the depth information inside the screen space and outside the screen space can be considered during ray tracing. In other words, in the embodiments of the present disclosure, ray tracing can be extended from the screen space to the outside of the screen space by performing ray tracing on the information map in which the full-view depth information of the virtual scene is recorded. In this way, a probability that the ray hits the valid surface may be greatly increased, thereby improving accuracy of the ray tracing, and significantly improving a global lighting effect implemented based on the ray tracing result.

### BRIEF DESCRIPTION OF THE DRAWINGS

To describe technical solutions of embodiments of the present disclosure more clearly, accompanying drawings required for describing the embodiments are briefly described below. Apparently, the accompanying drawings in the following description show only some embodiments of the present disclosure, and a person of ordinary skill in the art may still derive other drawings from these accompanying drawings without creative efforts.
FIG. 1a is a schematic diagram of a ray tracing method jointly performed by a terminal and a server according to an embodiment of the present disclosure.
FIG. 1b is a schematic diagram of another ray tracing method jointly performed by a terminal and a server according to an embodiment of the present disclosure.
FIG. 2 is a schematic flowchart of a ray tracing method according to an embodiment of the present disclosure.
FIG. 3a is a schematic diagram of generating a discrete surface element in a virtual scene according to an embodiment of the present disclosure.
FIG. 3b is a schematic diagram of generating a tracing ray in a virtual scene according to an embodiment of the present disclosure.
FIG. 3c is a schematic diagram of octahedron mapping according to an embodiment of the present disclosure.
FIG. 3d is a schematic diagram of obtaining a travel path of a tracing ray on an information map according to an embodiment of the present disclosure.
FIG. 4 is a schematic flowchart of a ray tracing method according to another embodiment of the present disclosure.
FIG. 5a is a schematic diagram of a viewing frustum of a camera according to an embodiment of the present disclosure.
FIG. 5b is a schematic diagram of obtaining an information map according to an embodiment of the present disclosure.
FIG. 5c is a schematic diagram of identifying a stepping point according to an embodiment of the present disclosure.
FIG. 6 is a schematic structural diagram of a ray tracing apparatus according to an embodiment of the present disclosure.
FIG. 7 is a schematic structural diagram of a computer device according to an embodiment of the present disclosure.

### DESCRIPTION OF EMBODIMENTS

Technical solutions in embodiments of the present disclosure are clearly and completely described below with reference to accompanying drawings in the embodiments of the present disclosure.

The embodiments of the present disclosure provide a ray tracing method based on depth information (i.e., full-view depth information) of a virtual scene according to a computer vision (CV) technology and a computer graphics technology in an artificial intelligence (AI) technology. The so-called AI technology is a technology that involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology of computer science. AI mainly produces a new intelligent machine that can respond in a similar manner to human intelligence by understanding the essence of intelligence, making the intelligent machine have various functions such as perception, reasoning, and decision-making. The CV in the AI technology is a science that studies how to use a machine to "see", and furthermore, a technology that uses a camera and a computer to replace human eyes to perform machine vision such as recognition, tracking, and measurement on a target, and further perform graphic processing, so that the computer processes the target into an image more suitable for human eyes to observe, or an image transmitted to an instrument for detection. The computer graphics technology of the AI technologies is a branch of science concerned with transforming, through mathematical algorithms, two-dimensional (2D) or three-dimensional (3D) graphics into a grid form of a computer display. In short, main research content of computer graphics is to research related principles and algorithms about how to represent a graph in a computer and calculate, process, and display a graph through a computer.

In the embodiments of the present disclosure, the virtual scene may be understood as a scene that may be displayed on a screen of a device. For example, the virtual scene may be a scene obtained by simulating a scene in a real world, for example, a scene obtained by simulating an autonomous driving scene or a scenic play scene in the real world. Alternatively, the virtual scene may be a semi-simulation and semi-fiction virtual scene, for example, a scene in which fictional characters are superimposed in a simulated world corresponding to the real world. Alternatively, the virtual scene may be a purely fictional scene, such as a scene of a game, a scene of films and television dramas, or a scene of a movie.

The virtual scene may include at least one virtual object. The virtual object may be a static object element in the virtual scene, such as a virtual lawn or a virtual building. Alternatively, the virtual object may be a movable object in a virtual scene, such as a virtual character in a game scene or a virtual animal in a game scene. Each virtual object in the virtual scene may be a static object element, or may be a movable object, or may include both a static object element and a movable object, which is not limited. The virtual scene may further include a camera. The camera is a component configured to present a view of a virtual scene in at least one viewing direction. A position of the camera in the virtual scene is not limited in embodiments of the present disclosure. For example, the camera may be at a position of a virtual object in the virtual scene, or at any position in the virtual scene other than the position of each virtual object.

A full view refers to an entire viewing angle (i.e., a viewing angle of 360 degrees) of any object (such as a user or a camera) viewing a virtual scene. The full view may include viewing angles in a plurality of viewing directions. The plurality of viewing directions herein may be set based on an empirical value or an actual requirement. For example, assuming that the virtual scene is built based on a 3D Cartesian coordinate system, the 3D Cartesian coordinate system is a coordinate system that may define a position of an object in a 3D space, and is formed by three coordinate axes, namely, an X axis (a horizontal axis), a Y axis (a vertical axis), and a Z axis (a vertical axis), the plurality of viewing directions may include a positive direction (i.e., a direction pointed by an arrow of the coordinate axis) of each coordinate axis in the 3D Cartesian coordinate system, and a negative direction (i.e., a direction opposite to the direction pointed by the arrow of the coordinate axis) of each coordinate axis. Because all virtual objects in the virtual scene can be viewed from the full view, the full-view depth information may include a depth value of each virtual object in the virtual scene. The depth value of any of the virtual objects is a distance value between the corresponding virtual object and the camera. A distance value between the same virtual object and the camera is constant regardless of the viewing angle. Therefore, the same virtual object has the same depth value in different viewing angles in the full view. In a ray tracing process, the depth value of any of the virtual objects may be configured for determining whether a virtual object exists at a position reached by a ray, to obtain a ray tracing result.

Based on the foregoing definition, the principle of the ray tracing method based on full-view depth information of a virtual scene provided in the embodiments of the present disclosure is described below. A general principle of the method is as follows. First, an information map of a virtual scene may be obtained, and a tracing ray configured for ray tracing is generated in the virtual scene based on a position of a virtual object having a ray tracing demand. Then, the tracing ray may be projected from the virtual scene to the information map, to obtain a travel path of the tracing ray on the information map. Then, ray tracing may be performed on the information map along the travel path. The full-view depth information of the virtual scene is recorded in the information map, and the full-view depth information includes depth values of all virtual objects in the virtual scene. In other words, the full-view depth information includes both q depth value of q virtual object presented on a screen and a depth value of a virtual object that is not presented on the screen (i.e., a depth value of a virtual object outside the screen). Therefore, in the embodiments of the present disclosure, the ray tracing is performed on the information map in which the full-view depth information is recorded, so that ray tracing may be performed based on both the depth value of the virtual object in the screen and the depth value of the virtual object outside the screen, thereby extending the ray tracing beyond the screen, and eliminating a limitation in a conventional ray tracing method that valid ray tracing cannot be performed outside a screen space as a result of a lack of depth information outside a screen space. In this way, a probability that a ray hits a valid surface is greatly increased, and accuracy of the ray tracing is improved. In addition, because the information map may be a 2D map, it may be learned that an entire ray tracing process in the embodiments of the present disclosure can be completed on a 2D map, which can greatly improve the efficiency of the ray tracing.

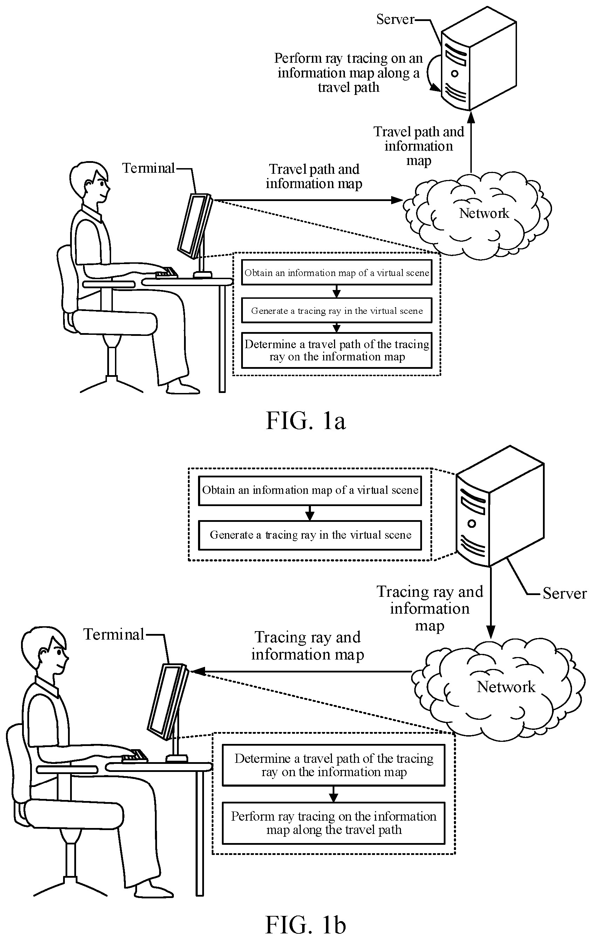

In the process of implementation, the foregoing method can be performed by a computer device (e.g., a computing device). The computer device may be a terminal or a server. Alternatively, the foregoing method may be jointly performed by the terminal and the server. For example, the terminal may be configured to obtain the information map, generate the tracing ray, determine the travel path of the tracing ray on the information map, and transmit the travel path and the information map to the server. As a result, the server performs the operation of performing ray tracing on the information map along the travel path, as shown in FIG. 1a. For another example, the server may also be configured to obtain the information map, generate the tracing ray, and transmit the information map and the tracing ray to the terminal. As a result, the terminal obtains the travel path of the tracing ray on the information map by projecting the tracing ray, and performs ray tracing on the information map along the travel path, as shown in FIG. 1b. For another example, the server and the terminal may be configured to respectively obtain the information map, and the server is configured to perform a series of operations to obtain the travel path of the tracing ray on the information map, and transmit the travel path to the terminal. As a result, the terminal performs, on the information map generated by the terminal, ray tracing along the travel path transmitted by the server.

The foregoing terminal may include, but is not limited to, a smart phone, a computer (such as a tablet computer, a laptop, and a desktop computer), a smart wearable device (such as a smart watch and smart glasses), a smart voice interactive device, a smart home appliance (such as a smart television), an onboard terminal, an aircraft, or the like. The server may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and AI platform. In addition, the terminal and the server may be located outside a blockchain network, or may be located inside a blockchain network, which is not limited. The so-called blockchain network is a network composed of a point-to-point network (P2P network) and a blockchain. The blockchain refers to a new application mode of computer technologies such as distributed data storage, point-to-point transmission, a consensus mechanism, and an encryption algorithm. The blockchain is essentially a decentralized database, and is a string of associated data blocks (or referred to as blocks) generated through a cryptography method. When either of the terminal and the server is located in the blockchain network, or has a communication connection with the blockchain network, either of the devices may upload internal data to the blockchain of the blockchain network for storage, so as to prevent the internal data of the computer device from being tampered, thereby improving security of the internal data.

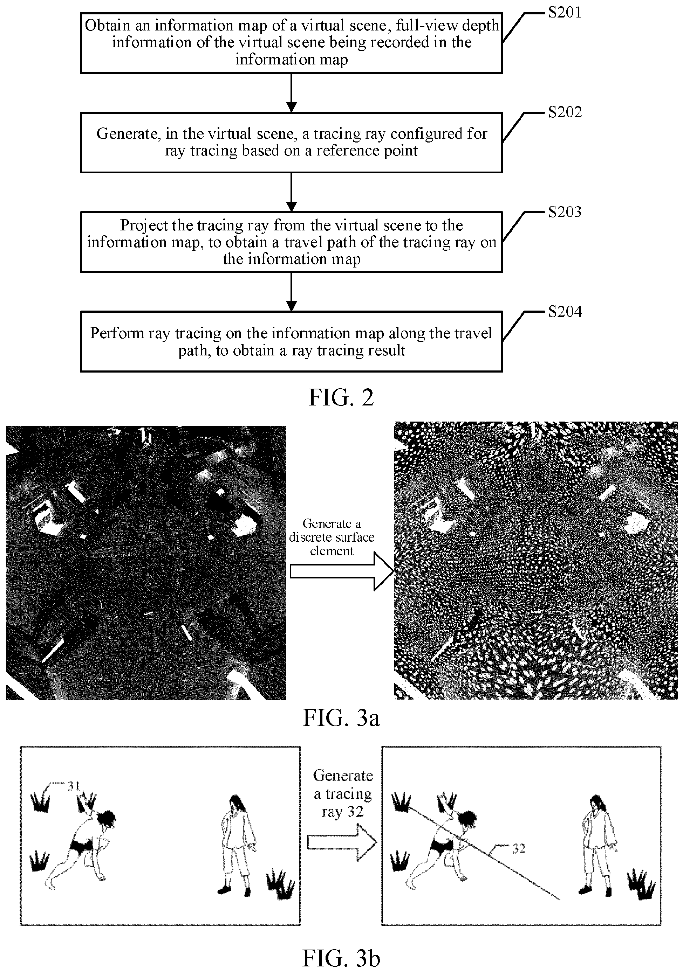

Based on the foregoing description, an embodiment of the present disclosure provides a ray tracing method. The ray tracing method may be performed by the foregoing computer device (the terminal or the server), or may be jointly performed by the terminal and the server. For ease of description, a description is provided by using an example in which the computer device performs the ray tracing method subsequently. Referring to FIG. 2, a ray tracing method may include operation S201 to operation S204.

S201: Obtain an information map of a virtual scene, depth information of the virtual scene being recorded in the information map.

In an example, the depth information of the virtual scene may include full-view depth information. In an implementation, it may be learned from the foregoing description that a full view of the virtual scene includes viewing angles in a plurality of viewing directions. The full view herein refers to all viewing angles of any object (such as a user or a camera) viewing the virtual scene, for example, a 360° viewing angle. The plurality of viewing directions may be set based on an empirical value or an actual requirement. For example, assuming that the virtual scene is built based on a 3D Cartesian coordinate system, the plurality of viewing directions may include a positive direction of each coordinate axis in the 3D Cartesian coordinate system, and a negative direction of each coordinate axis.

All virtual objects in the virtual scene may be viewed from the full view. Therefore, the full-view depth information may include a depth value of each virtual object in the virtual scene. A depth value of any of the virtual objects is a distance value between the corresponding virtual object and the camera. A distance value between the same virtual object and the camera is constant regardless of the viewing angle. Therefore, the same virtual object has the same depth value in different viewing angles in the full view.

In some embodiments, when obtaining the information map of the virtual scene, the computer device may separately collect, in each viewing direction, depth information of the virtual scene in a corresponding viewing direction, so as to construct the information map of the virtual scene based on the collected depth information. For example, the implementation of operation S201 may be as follows. First, an initial 3D map of a virtual scene may be obtained. The initial 3D map is an image configured to record a scene view of the virtual scene in each viewing direction, and may include a plurality of surfaces. Each surface indicates the scene view of the virtual scene in each viewing direction, and different surfaces correspond to different viewing directions. In other words, a quantity of surfaces in the initial 3D map is the same as a quantity of viewing directions in the virtual scene. When the virtual scene involves six viewing directions (for example, the positive direction and the negative direction of the X axis, the Y axis, and the Z axis described above), the initial 3D map may be a cube map composed of six surfaces. The six surfaces of the cube map respectively represent scene views seen when the virtual scene is viewed along the positive direction and the negative direction of the X axis, the Y axis, and the Z axis. Secondly, depth information of the virtual scene in each viewing direction may be obtained. Any depth information includes a depth value of each virtual object in the scene view in the corresponding viewing direction. If a scene view in a viewing direction does not include a virtual object, depth information in the viewing direction is null. Then, a depth value in each piece of obtained depth information may be recorded into a pixel point in a corresponding surface of the initial 3D map, to obtain the target 3D map. In addition, each pixel point in the target 3D map may be mapped to a 2D blank map, to obtain the information map of the virtual scene. The 2D blank map is a 2D map that does not include any information. It may be learned that the full-view depth information of the virtual scene (i.e., the depth values of the virtual objects) is directly recorded in the information map obtained in this implementation. In this way, searching efficiency can be effectively improved when the information map is searched for the depth value of any of the virtual objects.

In another implementation, the computer device may construct the information map of the virtual scene through a discrete surface element. The discrete surface element refers to a plane figure (such as an ellipse or a circle) having a direction and a size. The implementation of operation S201 may be as follows. First, a plurality of discrete surface elements may be generated in the virtual scene, and at least one discrete surface element is attached to a surface of each virtual object in the virtual scene. Exemplarily, reference may be made to FIG. 3a for a schematic diagram of generating the discrete surface element in the virtual scene. A left figure in FIG. 3a is a scene view of the virtual scene, and a right figure in FIG. 3a is the generated discrete surface element. Next, a distance value between each discrete surface element and the camera may be obtained, and the distance value is used as the depth value of the corresponding discrete surface element in the virtual scene. A manner for obtaining a distance value between any discrete surface element and the camera may be as follows. A Euclidean distance is calculated based on world space coordinates of any discrete surface element and world space coordinates of the camera, to obtain the distance value between the corresponding discrete surface element and the camera. The world space coordinates refer to coordinates in a world space coordinate system. The world space coordinate system may also be referred to as an absolute coordinate system, which does not change with a viewing angle or another factor. After obtaining the depth value of each discrete surface element in the virtual scene, the computer device may construct the information map of the virtual scene through the depth value of each discrete surface element in the virtual scene. For example, the computer device may obtain a 2D map template. The map template includes a plurality of pixel points, and each pixel point is configured for storing a depth value. Based on a direction vector between each discrete surface element and the camera, the map template is searched for a pixel point corresponding to each discrete surface element. Then, the depth value of each discrete surface element in the virtual scene is stored into the corresponding pixel point, to obtain the information map of the virtual scene. It may be learned that the depth information (for example, the full-view depth information) of the virtual scene is recorded in the information map obtained in this implementation in a form of a depth value of a discrete surface element attached to the surface of each virtual object. Compared with a manner of obtaining the information map by collecting depth information in each viewing direction, this implementation can simplify a construction process of the information map, and improve efficiency of obtaining the information map.

S202: Generate, in the virtual scene, a tracing ray configured for ray tracing based on a reference point.

During implementation of operation S202, the computer device may invoke an image processing engine to generate the tracing ray in the virtual scene based on the reference point. The tracing ray may be understood as a virtual ray (that is, a ray not existing in the virtual scene). The computer device may invoke the image processing engine to determine a transmission direction of one tracing ray based on a service requirement, or randomly determine a transmission direction of one tracing ray. Then, the reference point of the image processing engine in the virtual scene is invoked to generate a tracing ray for ray tracing in the transmission direction. That is, the operation of generating, in the virtual scene, the tracing ray configured for ray tracing based on the reference point can be understood as that: generating a tracing ray (virtual ray) from the reference point or with the reference point as the starting point according to the emission direction determined based on the service requirement or randomly.

In this embodiment of the present disclosure, the reference point is a position of a virtual object having a ray tracing demand in a virtual scene. The virtual object having a ray tracing demand may be any of the virtual objects of a plurality of virtual objects in the virtual scene. In an actual application, the virtual object having a ray tracing demand in the virtual scene may be set based on the service requirement. In other words, an existence of the ray tracing demand may be determined through preset settings. For example, as shown in FIG. 3b, if the service requirement indicates that illumination information of a virtual character 31 in FIG. 3b needs to be collected, it may be set that the virtual character 31 has the ray tracing demand. Therefore, when performing operation S202, the computer device determines a position of the virtual character 31 in the virtual scene as the reference point, and generates a tracing ray 32 in FIG. 3b based on the reference point. Alternatively, the computer device may randomly select a virtual object from the virtual scene as the virtual object having a ray tracing demand. In other words, an existence of the ray tracing demand may be determined by means of random selection in the virtual scene. Therefore, when performing operation S202, the computer device determines a position of the virtual character randomly selected in the virtual scene as the reference point.

In some embodiments, a virtual object in focus in a current virtual scene may further be determined as the virtual object having a ray tracing demand. For example, for a 1v1 battle game, two player roles (i.e., virtual objects) currently participating in a battle are currently focused virtual objects. Therefore, the two player roles may be directly determined as the virtual objects having a ray tracing demand.

In some embodiments, a virtual object nearest to the camera in the current virtual scene may further be determined as the virtual object having a ray tracing demand. In other words, if the virtual scene has a plurality of virtual objects, for a current default camera (that is, a camera generating an image of the virtual scene, which may also be understood as a camera shooting an image of the current virtual scene), the virtual object nearest to the camera is the virtual object having a ray tracing demand. In this way, when the information map of the virtual scene is obtained in S201, a depth value between the camera and each virtual object can be determined. Therefore, the distance between each virtual object and the camera can be determined, thereby quickly determining the virtual object having a ray tracing demand.

S203: Project the tracing ray from the virtual scene to the information map, to obtain a travel path of the tracing ray on the information map.

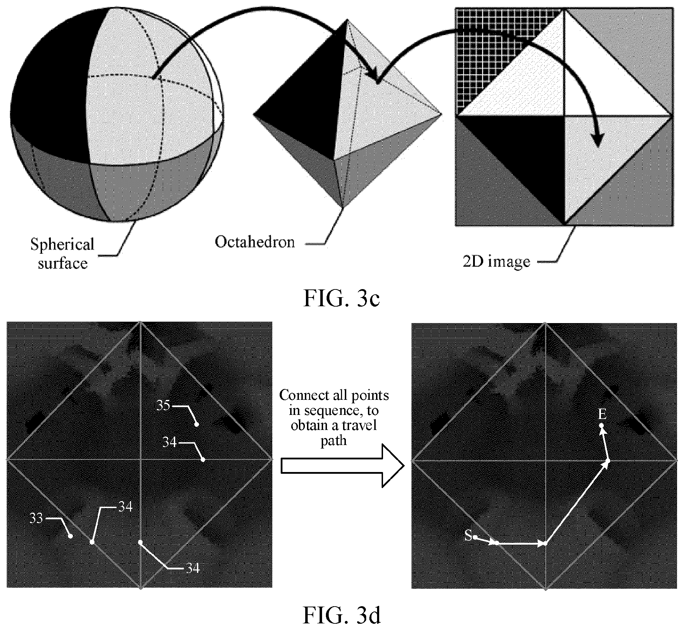

The virtual scene is located in a 3D space. Researches show that when a ray in the 3D space is mapped to a 2D image through octahedron mapping, the ray is segmented into a plurality of continuous line segments (at most four line segments). Each line segment is distributed on an independent surface of an octahedron, and a starting point of any line segment on the 2D image is a 2D projection of an intersection point of the ray and three axial planes of the corresponding coordinate system in the 3D space. It may be learned based on the principle that, when the tracing ray in the virtual scene is projected to the 2D information map through the octahedron mapping, a plurality of continuous line segments may be obtained, and the continuous line segments may be used as the travel path of the tracing ray on the information map. In this embodiment of the present disclosure, the octahedral mapping is a method of mapping through spherical parameterization. A principle of the octahedron mapping is mapping a spherical parameter to an octahedron and then mapping the spherical parameter to the 2D image, as shown in FIG. 3c.

Based on the above, when performing operation S203, the computer device may project the starting point of the tracing ray to the information map through an octahedron mapping operation, to obtain a first projection point; determine a 3D space coordinate system corresponding to the virtual scene; and project an intersection point of the tracing ray and at least one axial plane in the 3D space coordinate system to the information map through the octahedron mapping operation, to obtain at least one second projection point. In addition, a path end point may be determined on the tracing ray based on a preset tracing path threshold (or referred to as a maximum tracing path, with a unit being a length unit), and the path end point is projected to the information map through the octahedron mapping operation, to obtain a third projection point. Then, the first projection point, the at least one second projection point, and the third projection point may be connected in sequence, to obtain the travel path of the tracing ray on the information map. Exemplarily, assuming that three second projection points are provided, the first projection point is identified by using a mark 33, each second projection point is identified by using a mark 34, and the third projection point is identified by using a mark 35, the obtained travel path of the tracing ray on the information map may be shown in FIG. 3d. The first projection point is a starting point S of the travel path, and the third projection point is an ending point E of the travel path.

In some embodiments, an implementation in which the computer device projects any point to the information map through the octahedron mapping operation may be as follows. First, a direction vector between any point and the camera may be obtained, a direction of the direction vector being a direction from the camera to any point. Next, normalization processing may be performed on each vector element in the direction vector, so that a modulus of the normalized direction vector is 1. In this way, the normalized direction vector may be configured for representing a position of any point on a spherical surface constructed by using the camera as a center. Then, the normalized direction vector may be converted into 2D coordinates in a preset conversion manner, and the 2D coordinates obtained through the conversion are coordinates of a projection point of any point on the information map.

During implementation, the normalized direction vector (the direction vector may be a 3D direction vector) may be first obtained, and then the normalized direction vector is converted in the preset conversion manner, to obtain the 2D coordinates. The preset conversion manner may be implemented through invoking of a conversion function. An input of the conversion function is the normalized direction vector, and an output of the conversion function is the 2D coordinates. During the conversion through the conversion function, corresponding 2D coordinates may be determined through determining of a magnitude of values of the normalized direction vector in 3D directions (the X axis, the Y axis, and the Z axis described above).

In this embodiment of the present disclosure, it may be determined whether an x component of the normalized direction vector in the direction of the x axis is greater than 0. If yes, a value of the x component of the 2D coordinates is 1. Otherwise, the value is -1. In addition, it may be determined whether a y component of the normalized direction vector in the direction of the y axis is greater than 0. If yes, a value of the y component of the 2D coordinates is 1. Otherwise, the value is -1.

For example, if the value of the normalized direction vector in the direction of the X axis is greater than 0, and the value of the normalized direction vector in the direction of the Y axis is also greater than 0, it may be determined that outputted 2D coordinates are (1, 1). If the value of the normalized direction vector in the direction of the X axis is greater than 0, and the value of the normalized direction vector in the direction of the Y axis is less than or equal to 0, it may be determined that the outputted 2D coordinates are (1, -1). If the value of the normalized direction vector in the direction of the X axis is less than or equal to 0, and the value of the normalized direction vector in the direction of the Y axis is greater than 0, it may be determined that the outputted 2D coordinates are (-1, 1). If the value of the normalized direction vector in the direction of the X axis is less than or equal to 0, and the value of the normalized direction vector in the direction of the Y axis is also less than or equal to 0, it may be determined that the outputted 2D coordinates are (-1, -1).

In some embodiments, if the value of the normalized direction vector in the direction of the Z axis is greater than 0, it may be determined that final 2D coordinates are 2D coordinates determined based on the value in the direction of the X axis and the value in the direction of the Y axis. If the value of the normalized direction vector in the direction of the Z axis is less than or equal to 0, positive and negative correction is performed on the 2D coordinates determined based on the value in the direction of the X axis and the value in the direction of the Y axis. The positive and negative correction herein may refer to correcting a positive value to a negative value and correcting a negative value to a positive value. For example, if the 2D coordinates determined based on the value in the direction of the X axis and the value in the direction of the Y axis are (1, 1), and the value of the normalized direction vector in the direction of the Z axis is less than or equal to 0, the 2D coordinates obtained after the positive and negative correction is performed on the 2D coordinates are (-1, -1). In other words, the finally outputted 2D coordinates are (-1, -1).

S204: Perform ray tracing on the information map along the travel path, to obtain a ray tracing result.

It may be learned from the foregoing description that the information map includes a plurality of pixel points, each pixel point having a depth value stored therein, and one virtual object in the virtual scene corresponds to at least one pixel point in the information map. If the depth value of each virtual object of the virtual scene is directly recorded in the information map, one virtual object corresponds to one pixel point. If the depth value of each virtual object of the virtual scene is recorded in the information map in a form of a depth value of a discrete surface element attached to the surface of each virtual object, a quantity of pixel points corresponding to one virtual object is the same as a quantity of discrete surface elements in the virtual object. Based on the above, when performing operation S204, the computer device may determine, based on the depth value stored at the pixel point in the information map, whether the ray hits a valid surface, to obtain a ray tracing result.

The valid surface herein is a surface of any of the virtual objects in the virtual scene. In other words, that the ray hits the valid surface may be understood as that the ray (i.e., the tracing ray) hits a surface of a virtual object. Determining whether the ray hits the valid surface is essentially determining whether a virtual object exists in a place where the ray reaches. If yes, the ray hits the surface of the virtual object. When a virtual object exists at a position in the virtual scene, a depth value of the position is less than or equal to a depth value stored at a pixel point on the information map corresponding to the position. Therefore, the computer device may determine whether the ray hits the valid surface by determining a magnitude relationship between the depth value stored at the pixel point in the information map and a true depth value of the pixel point (i.e., a depth value of a mapping point of the pixel point in the virtual scene). If the depth value stored at the pixel point is greater than or equal to the true depth value of the pixel point, a virtual object exists at the mapping point of the pixel point in the virtual scene. Therefore, the ray can hit the valid surface. Otherwise, the ray does not hit the valid surface. Determining whether the ray hits the valid surface through this implementation eliminates a need to consider a position of the camera, thereby improving efficiency of the ray tracing and accuracy of the ray tracing result. In addition, the depth value stored in the information map may have a specific error due to some factors during the foregoing obtaining of the information map. Therefore, to improve an error-tolerant rate of the ray tracing, the computer device may determine whether the ray hits the valid surface by determining whether a difference between the depth value stored at the pixel point and the true depth value is less than or equal to a preset difference threshold. If the difference is less than or equal to the difference threshold, a virtual object exists at the mapping point of the pixel point in the virtual scene. Therefore, the ray can hit the valid surface. Otherwise, the ray does not hit the valid surface.

Alternatively, it may be learned from the foregoing description that the position of the camera in the virtual scene is not limited in this embodiment of the present disclosure. The camera may be at a position of a virtual object in the virtual scene, or may be at any position in the virtual scene other than the position of each virtual object. Because the depth value of any of the virtual objects is the distance value between the corresponding virtual object and the camera, and the distance value between each virtual object and the camera is inevitably a valid value (that is, a value other than zero) when the camera is at any position other than the position of each virtual object, the depth value of each virtual object recorded in the information map in this case is inevitably a valid value. In this case, the computer device may determine whether the ray hits the valid surface by determining whether the depth value stored at the pixel point in the information map is a valid value. If the depth value stored at the pixel point is a valid value, a virtual object exists at the mapping point of the pixel point in the virtual scene. Therefore, the ray can hit the valid surface. Otherwise, the ray does not hit the valid surface.

In this embodiment of the present disclosure, the information map in which the depth information (for example, the full-view depth information) of the virtual scene is recorded is obtained, and the tracing ray configured for ray tracing in the virtual scene is projected from the virtual scene to the information map, to obtain the travel path of the tracing ray on the information map, and the ray tracing is performed on the information map along the travel path, thereby eliminating a limitation in a conventional ray tracing method that valid ray tracing cannot be performed outside a screen space as a result of a lack of depth information outside a screen space. In other words, in this embodiment of the present disclosure, the ray tracing is performed on the information map in which the depth information (i.e., the full-view depth information) is recorded, so that the ray tracing can be extended to the outside of the screen. In this way, a probability that the ray hits the valid surface can be greatly increased, thereby improving the accuracy of the ray tracing. In addition, because the information map may be a 2D map, it may be learned that the entire ray tracing process in this embodiment of the present disclosure can be completed on a 2D map, which can greatly improve the efficiency of the ray tracing.

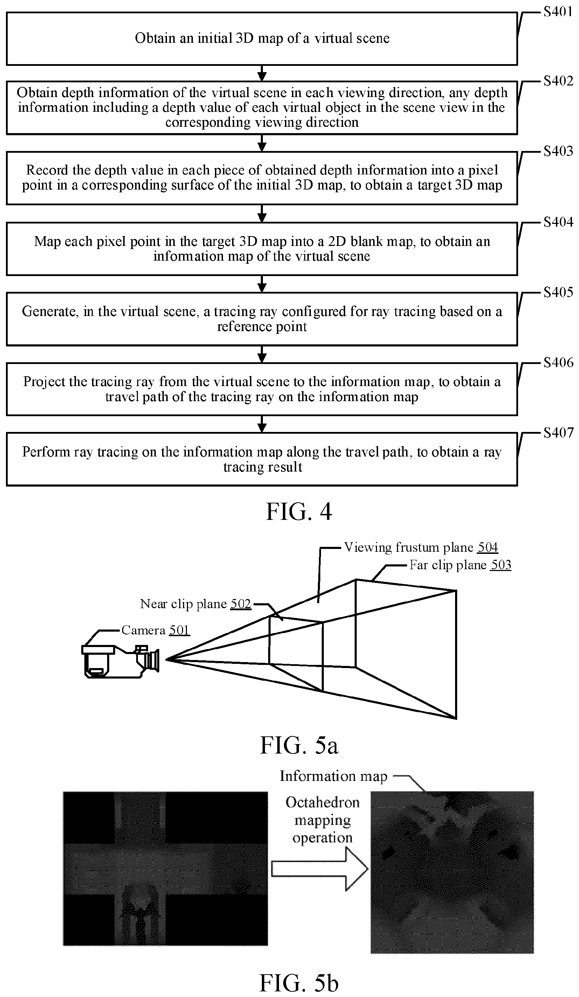

Based on the method embodiment shown in FIG. 2 above, an embodiment of the present disclosure further provides a ray tracing method. In the embodiments of the present disclosure, a description is provided by using an example in which the computer device performs the ray tracing method. In addition, in this embodiment of the present disclosure, the depth information (i.e., the full-view depth information) of the virtual scene is expressed as the 2D information map obtained after the octahedron mapping is performed on spherical depth information obtained after the depth test is performed on all virtual objects in the game scene based on a camera point. Referring to FIG. 4, the ray tracing method may include operation S401 to operation S407.

S401. Obtain an initial 3D map of a virtual scene.

The initial 3D map herein includes a plurality of surfaces, each surface represents a scene view of the virtual scene in each viewing direction, and different surfaces correspond to different viewing directions.

S402: Obtain depth information of the virtual scene in each viewing direction, any depth information including a depth value of each virtual object in the scene view in the corresponding viewing direction.

Because the scene view of the virtual scene in each viewing direction is obtained through photographing with a camera, the computer device may collect the depth information of the virtual scene in various viewing directions based on the camera. In a process of performing operation S402, the computer device may first traverse each viewing direction related to the full view of the virtual scene, and control the camera to perform viewing frustum clipping on the virtual object in the virtual scene in a viewing direction currently being traversed. The so-called viewing frustum clipping refers to processing of determining whether the virtual object falls into (that is, is located in) the viewing frustum of the camera. If any of the virtual objects falls into the viewing frustum of the camera, the virtual object has been subjected to the viewing frustum clipping; otherwise, the virtual object has not been subjected to the viewing frustum clipping. The viewing frustum herein refers to a frustum space visible to the camera, and looks like a pyramid with a clipped top. FIG. 5a is a schematic diagram of a viewing frustum of a camera according to an embodiment of the present disclosure. A viewing frustum of a camera 501 is composed of a near clip plane 502, a far clip plane 503, and four viewing frustum planes 504. The near clip plane 502 is a surface arranged to prevent a virtual object from being excessively close to the camera to be visible. The far clip plane 503 is a surface arranged to prevent a virtual object from being excessively far from the camera to be visible. The four viewing frustum planes 504 are surfaces formed by tangents of four lines diverging from the camera 501 and two clipping planes.

Then, a depth test may be performed on each virtual object that has been subjected to the viewing frustum clipping, to obtain depth information of the virtual scene in the viewing direction currently being traversed. The computer device may poll each virtual object that has been subjected to the viewing frustum clipping; calculate a distance value between the virtual object currently being polled and the camera based on position coordinates of the virtual object currently being polled and the camera; and use the calculated distance value as a depth value of the virtual object currently being polled, and add the calculated distance value to the depth information of the virtual scene the viewing direction currently being traversed. The position coordinates of the virtual object and the camera herein may be world space coordinates, or may be coordinates of the virtual object and the camera in a scene coordinate system (that is, a coordinate system established by a point in the virtual scene) of the virtual scene, which is not limited. In addition, the computer device may calculate a Euclidean distance based on the coordinates of the two positions, to obtain the distance value. In other words, the computer device may calculate the Euclidean distance between the virtual object currently being polled and the camera based on the position coordinates of the virtual object currently being polled and the position coordinates of the camera, to obtain a corresponding distance value.

In other words, in this embodiment of the present disclosure, a 2D information map obtained after the octahedron mapping is performed on spherical depth information obtained after the depth test is performed on all virtual objects in the virtual scene based on a camera may be selected as a representation manner of full-view depth information of the virtual scene.

Herein, an implementation method for obtaining the 2D information map is provided. First, a cube map of full-view depth information of a scene is constructed according to the following method, an X+ axis (that is, a positive direction of the X axis) may be selected, and a current camera orientation is set to a direction of the X+ axis. Then, the viewing frustum clipping is performed on all virtual objects in a full scene in a direction of the camera. The depth test is performed on the virtual object if the virtual object has been subjected to the viewing frustum clipping, so as to record a depth map obtained after the depth test is performed on all virtual objects inside the viewing frustum onto a corresponding surface on a cube map corresponding to the X+ axis. Finally, the foregoing operations are performed on the remaining five directions (an X- axis, a Y+ axis, a Y- axis, a Z+ axis, and a Z- axis) in sequence, to finally obtain a cube map in which the full-view depth information of the virtual scene is recorded. After the cube map of the full-view depth information of the virtual scene is obtained, an octahedron mapping operation may be performed on each pixel point on the cube map, to obtain the 2D map recording the full-view depth information of the virtual scene.

When the camera is controlled to perform the viewing frustum clipping on the virtual object in the virtual scene in the viewing direction currently being traversed, if no virtual object has been subjected to the viewing frustum clipping, in other words, all virtual objects do not fall into the viewing frustum of the camera, the depth information of the virtual scene in the viewing direction currently being traversed is null.

S403: Record the depth value in each piece of obtained depth information into a pixel point in a corresponding surface of the initial 3D map, to obtain a target 3D map.

In this embodiment of the present disclosure, the computer device may poll each viewing direction, traverse each depth value in depth information of a viewing direction currently being polled, and determine a virtual object to which a depth value currently traversed belongs; search a surface corresponding to the viewing direction current polled in the initial 3D map for a pixel point corresponding to the determined virtual object; and store the depth value currently traversed into the pixel point that is found, and continue traversing until each depth value in the depth information of the viewing direction current polled is traversed. Then, another viewing direction continues to be polled, until all viewing directions are polled, and depth values in the depth information of all viewing directions are traversed, to obtain the target 3D map.

S404: Map each pixel point in the target 3D map into a 2D blank map, to obtain an information map of the virtual scene.

In this embodiment of the present disclosure, each pixel point in the target 3D map is mapped to the 2D blank map, to obtain the information map of the virtual scene, so that the full-view depth information of the virtual scene is recorded through the 2D information map. Therefore, when ray tracing is subsequently performed on the information map through operation S405 to operation S407, an entire ray tracing process may be completed on one 2D image, thereby improving the efficiency of the ray tracing.

In this embodiment of the present disclosure, for any pixel point in the target 3D map, a position point corresponding to the any pixel point in the virtual scene may be determined, then the position point is projected to the 2D blank map through the octahedron mapping operation, to obtain a projection point corresponding to the position point, and any pixel point is recorded at the projection point. A related description of the manner of projecting the position point through the octahedron mapping operation and the operation S203 in the method embodiment shown in FIG. 2 is not repeated herein. In addition, the position point corresponding to any pixel point in the virtual scene is a position of an object represented by any pixel point in the virtual scene. For example, if an object represented by any pixel point is an eye of a virtual object, the position point corresponding to any pixel point in the virtual scene is a position of the eye of the virtual object. For example, reference is made to FIG. 5b for an information map obtained by mapping each pixel point in the target 3D map. A left figure in FIG. 5b does not completely show the target 3D map, and only exemplarily shows some surfaces in the target 3D map.

S405: Generate, in the virtual scene, a tracing ray configured for ray tracing based on a reference point.

S406: Project the tracing ray from the virtual scene to the information map, to obtain a travel path of the tracing ray on the information map.

For implementations of operation S405 and operation S406, reference may be made to the implementations of operation S202 and operation S203 in the method embodiment shown in FIG. 2. Details are not described herein again. In addition, an execution sequence of operation S405 and operation S401 to operation S404 is not limited in this embodiment of the present disclosure. In other words, the computer device may first perform operation S401 to operation S404, and then perform operation S405. Alternatively, operation S405 is first performed, and then operation S401 to operation S404 is performed. Alternatively, the computer device may simultaneously perform operation S401 to operation S404, operation S405, and the like.

S407: Perform ray tracing on the information map along the travel path, to obtain a ray tracing result.

In an implementation of operation S407, the computer device may perform the following operations. First, a pixel point on the travel path is selected as a current stepping point. Then, a depth value stored at the current stepping point found by searching the information map is determined as a reference depth value of the current stepping point. Next, the current stepping point is mapped into the virtual scene to obtain a mapping point, and a true depth value of the current stepping point is determined according to a position of the mapping point in the virtual scene. Finally, the ray tracing result is generated based on the reference depth value of the current stepping point and the true depth value of the current stepping point.

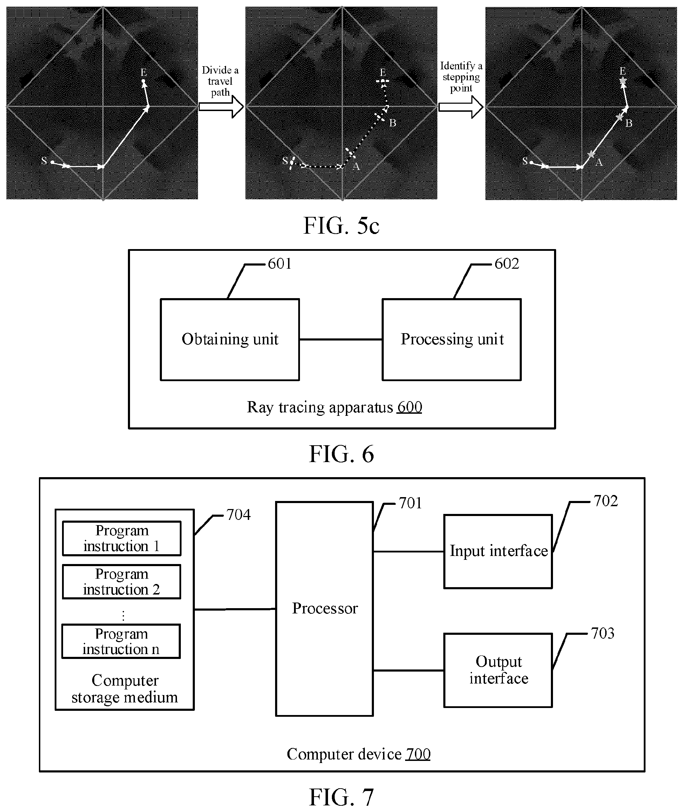

In this embodiment of the present disclosure, when selecting a pixel point on the travel path as the current stepping point, the computer device may first determine a plurality of stepping points on the information map based on a preset step length, so as to determine the current stepping point in a manner of selecting the stepping point. The step length herein refers to a distance between two adjacent landing points during travel. In this case, an implementation of selecting a pixel point on the travel path as the current stepping point may be: dividing the travel path into a plurality of tracing line segments based on a preset step length, and identifying an end point of each tracing line segment as a stepping point; and successively performing stepping to the identified stepping points, and determining a stepping point to which the stepping currently proceeds as the current stepping point. For example, as shown in FIG. 5c, it is assumed that the travel path is divided into three tracing line segments (line segments represented by dashed lines in FIG. 5c) based on the preset step length, namely, a line segment SA, a line segment AB, and a line segment BE, a five-pointed star pattern may be used, and an end point A of the line segment SA, an end point B of the line segment AB, and an end point E of the line segment BE are identified as the stepping points. In this implementation, a plurality of stepping points are first determined and then a stepping operation is performed, which can improve efficiency during stepping, thereby improving efficiency of selecting the current stepping point.

Alternatively, the computer device may directly step on the information map, to determine the current stepping point in real time. In this case, a manner of selecting the pixel point on the travel path as the current stepping point may be as follows. A step length corresponding to a current to-be-performed stepping operation is first determined, the stepping operation is performed on the travel path based on the determined step length, and a pixel point reached after the stepping operation is performed is determined as the current stepping point. In this way, the plurality of stepping points do not need to be determined in advance, thereby saving processing resources. In this implementation, the current stepping point is determined in real time, so that the stepping points do not need to be identified in advance, and processing resources can be saved. In this implementation, stepping operations performed at different moments may correspond to the same or different step lengths, which is not limited. For example, each time the computer device performs the stepping operation, the computer device may obtain the preset step length as the step length corresponding to the current stepping operation. In this case, step lengths of stepping operations performed at different moments are the same. For another example, the computer device may alternatively randomly generate a step length. In this case, step lengths of stepping operations performed at different moments may be different. In this way, diversity and vividness of a step process may be improved.

When the current stepping point is mapped to the virtual scene to obtain the mapping point, and the true depth value of the current stepping point is determined based on the position of the mapping point in the virtual scene, the computer device may first reversely map, based on the principle of the foregoing octahedron mapping operation, the current stepping point to an octahedron, then map the current stepping point to a spherical surface with the camera as a center, and finally map the current stepping point to the virtual scene to obtain the mapping point. Then, when determining the true depth value of the current stepping point based on the position of the mapping point in the virtual scene, the computer device may calculate the distance value between the mapping point and the camera based on the position of the mapping point in the virtual scene and the position of the camera in the virtual scene. The calculated distance value is determined as the true depth value of the current stepping point.

When the ray tracing result is generated based on the reference depth value of the current stepping point and the true depth value of the current stepping point, the computer device may determine whether the reference depth value of the current stepping point is greater than or equal to the true depth value of the current stepping point. If the reference depth value of the current stepping point is greater than or equal to the true depth value of the current stepping point, the virtual object exists at the mapping point corresponding to the current stepping point in the virtual space. Therefore, in this case, stepping may be ended, and the ray tracing result indicating that the ray hits the valid surface is generated. If the reference depth value of the current stepping point is less than the true depth value of the current stepping point, no virtual object exists at the mapping point corresponding to the current stepping point in the virtual space. Therefore, further stepping may be performed until a specified pixel point is reached in this case, and the ray tracing result indicating that the ray does not hit the valid surface is generated. The specified pixel point herein may be a preset pixel point, or may be a pixel point at a target distance from a start point of the tracing path. The target distance may be randomly generated or preset, which is not limited.

Alternatively, the computer device may calculate a difference between the reference depth value of the current stepping point and the true depth value of the current stepping point, and determine whether the calculated difference is less than or equal to a difference threshold. If the calculated difference is less than or equal to the difference threshold, the stepping is ended and the ray tracing result indicating that the ray hits a valid surface is generated. If the calculated difference is greater than the difference threshold, further stepping is performed until a specified pixel point is reached, and the ray tracing result indicating that the ray does not hit the valid surface is generated.

In another implementation of operation S407, the computer device may perform the following operations. First, a pixel point on the travel path is selected as a current stepping point. In addition, a depth value stored at the current stepping point found by searching the information map is determined as a reference depth value of the current stepping point. Then, whether the reference depth value of the current stepping point is a valid value is determined. Finally, if the reference depth value of the current stepping point is the valid value (that is, a value not being zero), the stepping is ended, and the ray tracing result indicating that the ray hits the valid surface is generated. If the reference depth value of the current stepping point is an invalid value (i.e., a zero), further stepping is performed until a specified pixel point is reached, and the ray tracing result indicating that the ray does not hit the valid surface is generated. This implementation may be performed when the camera is not located at a position of each virtual object in the virtual scene. In addition, for an implementation of selecting a pixel point on the travel path as the current stepping point, reference may be made to the foregoing descriptions. Details are not described herein again.

In this embodiment of the present disclosure, the information map in which the full-view depth information of the virtual scene is recorded is obtained, and the tracing ray configured for ray tracing in the virtual scene is projected from the virtual scene to the information map, to obtain the travel path of the tracing ray on the information map, and the ray tracing is performed on the information map along the travel path, thereby eliminating a limitation in a conventional ray tracing method that valid ray tracing cannot be performed outside a screen space as a result of a lack of depth information outside a screen space. In other words, in this embodiment of the present disclosure, the ray tracing is performed on the information map in which the full-view depth information is recorded, so that the ray tracing can be extended to the outside of the screen. In this way, a probability that the ray hits the valid surface can be greatly increased, thereby improving the accuracy of the ray tracing. In addition, because the information map may be a 2D map, it may be learned that the entire ray tracing process in this embodiment of the present disclosure can be completed on a 2D map, which can greatly improve the efficiency of the ray tracing.

In an actual application, the foregoing ray tracing method shown in FIG. 2 and FIG. 4 may be applied to various virtual scenes, such as a game scene and a scene of films and television dramas. Exemplarily, the virtual scene is the game scene. In this case, an application process of the ray tracing method may include the following two parts.

In a first part, full-view depth information of the game scene is represented. In this part, the full-view depth information of the game scene may be expressed as the 2D information map obtained after the octahedron mapping is performed on spherical depth information obtained after the depth test is performed on all virtual objects in the game scene based on a camera point. A method for obtaining the 2D information map may be as follows.

First, a target cube map (i.e., a target 3D map) of the full-view depth information of the scene may be constructed through the following operations. An X+ axis is first selected, and a current orientation of the camera is set to a direction of the X+ axis. Then, the camera is controlled to perform viewing frustum clipping on all virtual objects in the game scene in a current orientation. If a virtual object has been subjected to the viewing frustum clipping, a depth test is performed on the virtual object. Depth values obtained after the depth test is performed on all virtual objects inside a viewing frustum are recorded on a surface in an initial cube map (i.e., an initial 3D map) corresponding to the X+ axis. In addition, the foregoing operations are successively performed on other five viewing directions (an X- axis, a Y+ axis, a Y- axis, a Z+ axis, and a Z- axis), to finally obtain a target cube map in which full-scene depth information of the game scene is recorded.

After the target cube map in which the full-view depth information of the game scene is recorded is obtained, the octahedron mapping operation may be performed on each pixel point on the target cube map, to obtain a 2D information map in which the full-view depth information of the game scene is recorded.

In a second part, the ray tracing is performed based on the full-view depth information. In this part, the travel path of the ray in the 3D Cartesian coordinate system may be re-projected to the 2D information map through an octahedron mapping algorithm, so as to implement ray tracing in a full view range (including ranges inside the screen and outside the screen) on the 2D information map. Exemplarily, an implementation of this part may be as follows. First, a tracing ray is generated based on a position of a virtual object in the game scene having a ray tracing demand, and a maximum tracing path is set for the tracing ray. Then, the tracing ray is projected to the 2D information map, to obtain at most four continuous line segments. The continuous line segments form the travel path of the tracing ray on the information map. Next, the travel path is equally divided into a plurality of tracing line segments sequentially based on the preset step length, and corresponding stepping points are obtained. Finally, stepping to each stepping point is performed successively. A reference depth value of a current stepping point to which stepping currently proceeds on the information map is compared with a true depth value of the current stepping point in the game scene. If the reference depth value of the current stepping point is greater than or equal to the true depth value, that the stepping succeeds is returned, and a ray tracing result indicating that the ray hits a valid surface is generated. If the reference depth value of the current stepping point is less than the true depth value, the stepping is further performed until a maximum tracing path is reached, that the stepping fails is returned, and a ray tracing result indicating that the ray does not hit a valid surface is generated.

In this embodiment of the present disclosure, the ray tracing is performed segment by segment based on the information map in which the full-view depth information is recorded obtained through the octahedron mapping, which, compared with a conventional screen space ray tracing method, can extend the ray tracing to outside of the screen, thereby greatly increasing a hit probability of the ray and significantly improving accuracy of the ray tracing. In this way, a relatively accurate ray tracing result can be obtained, so that a game picture rendered based on the ray tracing result is more realistic. For example, when the ray tracing result indicates that the tracing ray successfully hits a valid surface, the game picture can more realistically represent refracting and reflecting effects of the ray. In addition, the entire ray tracing process is completed on one 2D information map, which can greatly improve tracing efficiency. In this way, a time required for the ray tracing can be shortened, thereby shortening a rendering time of the game picture, avoiding freezing of the game picture, and improving operation smoothness and stability of the game.

Based on the description of the foregoing ray tracing method embodiments, an embodiment of the present disclosure further discloses a ray tracing apparatus. The ray tracing apparatus may be a computer program (including program code) running in the computer device, and the ray tracing apparatus may perform the operations in the method procedure shown in FIG. 2 or FIG. 4. Referring to FIG. 6, the ray tracing apparatus 600 may run the following units: an obtaining unit 601, configured to obtain an information map of a virtual scene, depth information of the virtual scene being recorded in the information map, the depth information including a depth value of each virtual object in the virtual scene; and a processing unit 602, configured to generate, in the virtual scene, a tracing ray configured for ray tracing based on a reference point, the reference point being a position of a virtual object having a ray tracing demand in the virtual scene. The processing unit 602 is further configured to project the tracing ray from the virtual scene to the information map, to obtain a travel path of the tracing ray on the information map. The processing unit 602 is further configured to perform ray tracing on the information map along the travel path, to obtain a ray tracing result. In an example, the depth information of the virtual scene may include full-view depth information.

In some embodiments, each pixel point having a depth value stored therein, and a preset correspondence exists between a virtual object in the virtual scene and at least one pixel point in the information map. The processing unit 602 is further configured to: select a pixel point on the travel path as a current stepping point; determine, as a reference depth value of the current stepping point, a depth value stored at the current stepping point found by searching the information map; map the current stepping point to the virtual scene to obtain a mapping point, and determine a true depth value of the current stepping point based on a position of the mapping point in the virtual scene; and generate the ray tracing result based on the reference depth value of the current stepping point and the true depth value of the current stepping point.

In some embodiments, the virtual scene further includes a camera, and a depth value of any of the virtual objects is a distance value between the corresponding virtual object and the camera. The processing unit 602 is further configured to: determine the distance value between the mapping point and the camera based on the position of the mapping point in the virtual scene and a position of the camera in the virtual scene; and determine the distance value between the mapping point and the camera as the true depth value of the current stepping point.

In some embodiments, the processing unit 602 is further configured to: end stepping if the reference depth value of the current stepping point is greater than or equal to the true depth value of the current stepping point, and generate a ray tracing result indicating that the ray hits a valid surface, the valid surface being a surface of any of the virtual objects; and perform further stepping until the specified pixel point is reached if the reference depth value of the current stepping point is less than the true depth value of the current stepping point, and generate a ray tracing result indicating that the ray does not hit a valid surface.

In some embodiments, the processing unit 602 is further configured to: calculate a difference between the reference depth value and the true depth value; end the stepping if the difference is less than or equal to a difference threshold, and generate the ray tracing result indicating that the ray hits a valid surface, the valid surface being a surface of any of the virtual objects; and perform further stepping until the specified pixel point is reached if the difference is greater than the difference threshold, and generate the ray tracing result indicating that the ray does not hit the valid surface.

In some embodiments, the information map includes a plurality of pixel points, each pixel point has a depth value stored therein, and a preset correspondence exists between a virtual object in the virtual scene and at least one pixel point in the information map. The processing unit 602 is further configured to: select a pixel point on the travel path as a current stepping point; determine, as a reference depth value of the current stepping point, a depth value stored at the current stepping point found by searching the information map; end stepping if the reference depth value of the current stepping point is a valid value, and generate a ray tracing result indicating that the ray hits a valid surface, the valid surface being a surface of any of the virtual objects; and perform further stepping until a specified pixel point is reached if the reference depth value of the current stepping point is an invalid value, and generate a ray tracing result indicating that the ray does not hit a valid surface.

In some embodiments, the processing unit 602 is further configured to: determine a step length corresponding to a current to-be-performed stepping operation; and perform a stepping operation on the travel path based on the step length, and determine a pixel point reached after the stepping operation is performed as the current stepping point.

In some embodiments, the processing unit 602 is further configured to: divide the travel path into a plurality of tracing line segments based on a preset step length, and identify an end point of each tracing line segment as a stepping point; and successively perform stepping to the identified stepping points, and determine a stepping point to which the stepping currently proceeds as the current stepping point.

In some embodiments, a full view of the virtual scene includes viewing angles in a plurality of viewing directions. The obtaining unit 601 is further configured to: obtain an initial 3D map of the virtual scene, the initial 3D map including a plurality of surfaces, each surface representing a scene view of the virtual scene in each viewing direction, and different surfaces corresponding to different viewing directions; obtain depth information of the virtual scene in each viewing direction, the depth information in any viewing direction including a depth value of each virtual object in the scene view in the corresponding viewing direction; record the depth value in each piece of obtained depth information into a pixel point in a corresponding surface of the initial 3D map, to obtain a target 3D map; and map each pixel point in the target 3D map into a 2D blank map, to obtain the information map of the virtual scene.

In some embodiments, the scene view of the virtual scene in each viewing direction is obtained through photographing with a camera. The obtaining unit 601 is further configured to: traverse all of the viewing directions in the full view of the virtual scene; control the camera to perform viewing frustum clipping on the virtual object in the virtual scene in a viewing direction currently being traversed; determine, if any of the virtual objects falls into a viewing frustum of the camera, that the corresponding virtual object has been subjected to the viewing frustum clipping; and perform a depth test on each virtual object that has been subjected to the viewing frustum clipping, to obtain depth information of the virtual scene in the viewing direction currently being traversed.

In some embodiments, the obtaining unit 601 is further configured to: poll each virtual object that has been subjected to the viewing frustum clipping; calculate a distance value between the virtual object currently being polled and the camera based on position coordinates of the virtual object currently being polled and the camera; and use the calculated distance value as a depth value of the virtual object currently being polled, and add the calculated distance value to the depth information of the virtual scene the viewing direction currently being traversed.

In some embodiments, the obtaining unit 601 is further configured to: generate a plurality of discrete surface elements in the virtual scene, the discrete surface elements each being a plane figure having a direction and a size, and at least one discrete surface element being attached to a surface of each virtual object in the virtual scene; obtain a distance value between each discrete surface element and the camera in the virtual scene, and determine the distance value as a depth value of the corresponding discrete surface element in the virtual scene; and construct the information map of the virtual scene through the depth value of each discrete surface element in the virtual scene.

In some embodiments, the processing unit 602 is further configured to: project a starting point of the tracing ray to the information map through an octahedron mapping operation, to obtain a first projection point; determine a 3D space coordinate system corresponding to the virtual scene; project an intersection point of the tracing ray and at least one axial plane in the 3D space coordinate system to the information map through the octahedron mapping operation, to obtain at least one second projection point; determine a path end point on the tracing ray based on a preset tracing path threshold; project the path end point to the information map through the octahedron mapping operation, to obtain a third projection point; and connect the first projection point, the at least one second projection point, and the third projection point in sequence, to obtain the travel path of the tracing ray on the information map.

According to another embodiment of the present disclosure, each unit in the ray tracing apparatus shown in FIG. 6 may be respectively or all combined into one or more units, or one (some) of the units may further be split into a plurality of small units by functions, which may implement the same operation without affecting the implementation of the technical effects of the embodiments of the present disclosure. The foregoing units are divided based on logical functions. In actual application, functions of one unit may also be implemented by a plurality of units, or the functions of the plurality of units may be implemented by one unit. In another embodiment of the present disclosure, the ray tracing apparatus may further include another unit. In practical application, these functions may also be implemented with the assistance of other units, and may be implemented with the assistance of a plurality of units.

According to another embodiment of the present disclosure, a computer program (including program code) that can perform the operations involved in the corresponding method shown in FIG. 2 and FIG. 4 may be run in a general-purpose computing device such as a computer including processing elements such as a central processing unit (CPU), a random access storage medium (RAM), and a read-only storage medium (ROM) and storage elements, to construct the ray tracing apparatus shown in FIG. 6, thereby implementing the ray tracing method in the embodiments of the present disclosure. The computer program may be recorded on, for example, a computer storage medium, loaded into the foregoing computing device through the computer storage medium, and run in the computing device.

In this embodiment of the present disclosure, the information map in which the full-view depth information of the virtual scene is recorded is obtained, and the tracing ray configured for ray tracing in the virtual scene is projected from the virtual scene to the information map, to obtain the travel path of the tracing ray on the information map, and the ray tracing is performed on the information map along the travel path, thereby eliminating a limitation in a conventional ray tracing method that valid ray tracing cannot be performed outside a screen space as a result of a lack of depth information outside a screen space. In other words, in this embodiment of the present disclosure, the ray tracing is performed on the information map in which the depth information (i.e., the full-view depth information) is recorded, so that the ray tracing can be extended to outside of the screen. In this way, a probability that the ray hits the valid surface may be greatly increased, thereby improving accuracy of the ray tracing, and significantly improving a global lighting effect implemented based on the ray tracing result. In addition, because the information map may be a 2D map, it may be learned that the entire ray tracing process in this embodiment of the present disclosure can be completed on a 2D map, which can greatly improve the efficiency of the ray tracing.

Based on the description of the foregoing method embodiments and the apparatus embodiment, an embodiment of the present disclosure further provides a computer device. Referring to FIG. 7, the computer device 700 includes at least a processor 701, an input interface 702, an output interface 703, and a computer storage medium 704. The processor 701, the input interface 702, the output interface 703, and the computer storage medium 704 in the computer device may be connected by a bus or in another manner. The computer storage medium 704 may be stored in a memory of a computer device. The computer storage medium 704 is configured to store a computer program. The computer program includes program instructions (for example, a program instruction 1 to a program instruction n shown in FIG. 7). The processor 701 is configured to execute the program instructions stored in the computer storage medium 704. The processor 701 (or referred to as a CPU) is a computing core and a control core of the computer device, which is adapted to implement one or more instructions, for example, adapted to load and execute one or more instructions to implement corresponding method processes or corresponding functions.

In an embodiment, the processor 701 according to this embodiment of the present disclosure may be configured to perform a series of ray tracing processing, including: obtaining an information map of a virtual scene, depth information of the virtual scene being recorded in the information map, the depth information including a depth value of each virtual object in the virtual scene; generating, in the virtual scene, a tracing ray configured for ray tracing based on a reference point, the reference point being a position of a virtual object having a ray tracing demand in the virtual scene; projecting the tracing ray from the virtual scene to the information map, to obtain a travel path of the tracing ray on the information map; and performing ray tracing on the information map along the travel path, to obtain a ray tracing result, and the like. In an example, the depth information of the virtual scene may include full-view depth information of the virtual scene.

An embodiment of the present disclosure further provides a computer storage medium (memory). The computer storage medium is a memory device in a computer device, which is configured to store a program and data. The computer storage medium herein may include a built-in storage medium in the computer device, and certainly, may also include an extended storage medium supported by the computer device. The computer storage medium provides a storage space. The storage space has an operating system of the computer device stored therein. In addition, one or more computer instructions configured to be loaded and executed by the processor 701 are further stored in the storage space. The instructions may be one or more computer programs (including program code). The computer storage medium herein may be a high-speed RAM memory, or may be a non-volatile memory, for example, at least one magnetic disk memory. Certainly, the computer storage medium may further be at least one computer storage medium away from the foregoing processor.

In an embodiment, the processor may load and execute one or more instructions stored in the computer storage medium, to implement corresponding operations in the foregoing method embodiments shown in FIG. 2 or FIG. 4. During implementation, the one or more instructions in the computer storage medium may be loaded by the processor to perform the following operations: obtaining an information map of a virtual scene, full-view depth information of the virtual scene being recorded in the information map, the full-view depth information including a depth value of each virtual object in the virtual scene; generating, in the virtual scene, a tracing ray configured for ray tracing based on a reference point, the reference point being a position of a virtual object with a ray tracing requirement in the virtual scene; projecting the tracing ray from the virtual scene to the information map, to obtain a travel path of the tracing ray on the information map; and performing ray tracing on the information map along the travel path, to obtain a ray tracing result.

According to another aspect of the present disclosure, a computer program product is further provided. The computer program product includes a computer program. The computer program is stored in a computer storage medium. A processor of a computer device reads the computer program from the computer storage medium. The processor executes the computer program, so that the computer device performs the methods provided in various exemplary implementations of the method embodiments shown in FIG. 2 or FIG. 4. What is disclosed above is merely exemplary embodiments of the present disclosure, and certainly is not intended to limit the protection scope of the present disclosure. Therefore, equivalent variations made in accordance with the claims of the present disclosure still fall within the scope of the present disclosure.

## Claims

1. A method for ray tracing, performed by a computer device, the method comprising:
obtaining an information map of a virtual scene, wherein the information map comprises depth information of the virtual scene, the depth information comprising a depth value for each of a plurality of virtual objects in the virtual scene;
generating, in the virtual scene, a virtual ray from a reference point, wherein the reference point comprises a position of one of the plurality of virtual objects for which a ray tracing command is detected;
projecting the virtual ray from the virtual scene to the information map, to obtain a travel path of the virtual ray on the information map; and
tracing the virtual ray on the information map along the travel path, to obtain a ray tracing result.

2. The method of claim 1, wherein the information map comprises a plurality of pixel points, each of the plurality of pixel points having a stored depth value, and a preset correspondence existing between one of the plurality of virtual objects in the virtual scene and at least one pixel point in the information map; and
wherein tracing the virtual ray on the information map along the travel path, to obtain the ray tracing result comprises:
selecting a pixel point on the travel path as a current stepping point;
determining, as a reference depth value of the current stepping point, a depth value stored at the current stepping point found by searching the information map;
mapping the current stepping point to the virtual scene to obtain a mapping point, and determining a true depth value of the current stepping point using a position of the mapping point in the virtual scene; and
generating the ray tracing result using the reference depth value of the current stepping point and the true depth value of the current stepping point.

3. The method of claim 2, wherein the virtual scene further comprises a camera, and a depth value of each of the plurality of virtual objects being a distance value between the virtual object and the camera; and
wherein determining the true depth value of the current stepping point using the position of the mapping point in the virtual scene comprises:
determining a distance value between the mapping point and the camera using the position of the mapping point in the virtual scene and a position of the camera in the virtual scene; and
determining the distance value between the mapping point and the camera as the true depth value of the current stepping point.

4. The method of claim 2 or 3, wherein generating the ray tracing result using the reference depth value of the current stepping point and the true depth value of the current stepping point comprises:
ending selecting a next stepping point when the reference depth value of the current stepping point is greater than or equal to the true depth value of the current stepping point, and generating a ray tracing result indicating that the virtual ray hits a valid surface, wherein the valid surface is a surface of one of the plurality of virtual objects; or
selecting a next stepping point until a specified pixel point is reached when the reference depth value of the current stepping point is less than the true depth value of the current stepping point, and generating a ray tracing result indicating that the virtual ray does not hit a valid surface.

5. The method of any one of claims 2 to 4, wherein generating the ray tracing result using the reference depth value of the current stepping point and the true depth value of the current stepping point comprises:
calculating a difference between the reference depth value and the true depth value;
ending selecting a next stepping point in response to determining that the difference is less than or equal to a difference threshold, and generating the ray tracing result indicating that the virtual ray hits a valid surface, wherein the valid surface is a surface of one of the plurality of virtual obj ects; or
selecting a next stepping point until a specified pixel point is reached in response to determining that the difference is greater than a difference threshold, and generating the ray tracing result indicating that the virtual ray does not hit the valid surface.

6. The method of claim 1, wherein the information map comprises a plurality of pixel points, each of the plurality of pixel points having a stored depth value, and a preset correspondence existing between one of the plurality of virtual objects in the virtual scene and at least one pixel point in the information map; and
wherein tracing the virtual ray on the information map along the travel path, to obtain the ray tracing result comprises:
selecting a pixel point on the travel path as a current stepping point;
determining, as a reference depth value of the current stepping point, a depth value stored at the current stepping point found by searching the information map;
ending selecting a next stepping point when the reference depth value of the current stepping point is a valid value, and generating a ray tracing result indicating that the ray hits a valid surface, wherein the valid surface is a surface of one of the plurality of virtual objects; or
selecting a next stepping point until a specified pixel point is reached when the reference depth value of the current stepping point is an invalid value, and generating a ray tracing result indicating that the ray does not hit a valid surface.

7. The method of claim 2 or 6, wherein selecting the pixel point on the travel path as the current stepping point comprises:
determining a step length corresponding to a current to-be-performed stepping operation; and
performing a stepping operation on the travel path using the step length, and determining a pixel point reached after the stepping operation is performed as the current stepping point.

8. The method of claim 2 or 6, wherein selecting the pixel point on the travel path as the current stepping point comprises:
dividing the travel path into a plurality of tracing line segments using a preset step length, and identifying an end point of each of the plurality of tracing line segments as a stepping point; and
successively performing stepping to the identified stepping points, and determining a stepping point to which the stepping currently proceeds as the current stepping point.

9. The method of any one of claims 1 to 8, wherein a full view of the virtual scene comprises viewing angles in a plurality of viewing directions; and
wherein obtaining the information map of the virtual scene comprises:
obtaining an initial three-dimensional (3D) map of the virtual scene, wherein the initial 3D map comprises a plurality of surfaces, each of the plurality of surfaces representing a scene view of the virtual scene in a respective one of the plurality of viewing directions, and different surfaces corresponding to different viewing directions;
obtaining depth information of the virtual scene in each of the plurality of viewing directions, wherein the depth information in one of the plurality of viewing directions comprises a depth value of each of the plurality of virtual objects in the scene view in the viewing direction;
recording the depth value in each piece of obtained depth information into a pixel point in a corresponding surface of the initial 3D map, to obtain a target 3D map; and
mapping each pixel point in the target 3D map into a two-dimensional (2D) blank map, to obtain the information map of the virtual scene.

10. The method of claim 9, wherein the scene view of the virtual scene in each of the plurality of viewing directions is obtained through photographing with a camera; and
wherein obtaining depth information of the virtual scene in each of the plurality of viewing directions comprises:
traversing each of the plurality of viewing directions in the full view of the virtual scene;
controlling the camera to perform viewing frustum clipping on the plurality of virtual objects in the virtual scene in a viewing direction currently being traversed, and determining, if one of the virtual objects falls into a viewing frustum of the camera, that the virtual object has been subjected to the viewing frustum clipping; and
performing a depth test on each virtual object that has been subjected to the viewing frustum clipping, to obtain depth information of the virtual scene in the viewing direction currently being traversed.

11. The method of claim 10, wherein performing the depth test on each virtual object that has been subjected to the viewing frustum clipping, to obtain depth information of the virtual scene in the viewing direction currently being traversed comprises:
polling each virtual object that has been subjected to the viewing frustum clipping;
calculating a distance value between the virtual object currently being polled and the camera using position coordinates of the virtual object currently being polled and the camera; and
using the calculated distance value as a depth value of the virtual object currently being polled, and adding the calculated distance value to the depth information of the virtual scene the viewing direction currently being traversed.

12. The method of any one of claims 1 to 11, wherein obtaining the information map of the virtual scene comprises:
generating a plurality of discrete surface elements in the virtual scene, wherein each of the plurality of discrete surface elements is a plane figure having a direction and a size, and at least one of the plurality of discrete surface elements is attached to a surface of each of the plurality of virtual objects in the virtual scene;
obtaining a distance value between each of the plurality of discrete surface elements and a camera in the virtual scene, and determining the distance value as a depth value of the discrete surface element in the virtual scene; and
constructing the information map of the virtual scene using the depth value of each of plurality of discrete surface elements in the virtual scene.

13. The method of any one of claims 1 to 12, wherein projecting the virtual ray from the virtual scene to the information map, to obtain the travel path of the virtual ray on the information map comprises:
projecting a starting point of the virtual ray to the information map through an octahedron mapping operation, to obtain a first projection point;
determining a 3D space coordinate system corresponding to the virtual scene;
projecting an intersection point of the virtual ray and at least one axial plane in the 3D space coordinate system to the information map through the octahedron mapping operation, to obtain at least one second projection point;
determining a path end point on the virtual ray using a preset tracing path threshold;
projecting the path end point to the information map through the octahedron mapping operation, to obtain a third projection point; and
connecting the first projection point, the at least one second projection point, and the third projection point in sequence, to obtain the travel path of the virtual ray on the information map.

14. An apparatus for ray tracing, comprising:
an obtaining unit, configured to obtain an information map of a virtual scene, wherein the information map comprises depth information of the virtual scene, the depth information comprising a depth value for each of a plurality of virtual objects in the virtual scene; and
a processing unit, configured to generate, in the virtual scene, a virtual ray from a reference point, wherein the reference point comprises a position of one of the plurality of virtual objects for which a ray tracing command is detected;
the processing unit being further configured to project the virtual ray from the virtual scene to the information map, to obtain a travel path of the virtual ray on the information map; and
the processing unit being further configured to trace the virtual ray on the information map along the travel path, to obtain a ray tracing result.

15. A computer device, comprising an input interface, an output interface, a processor, and a computer storage medium,
wherein the processor is configured to execute one or more instructions, the computer storage medium is configured to store the one or more instructions, the one or more instructions being configured to be loaded and executed by the processor to perform the method for ray tracing of any one of claims 1 to 13.

16. A computer storage medium having stored therein one or more instructions that, when loaded and executed by a processor, cause the processor to perform the method for ray tracing of any one of claims 1 to 13.

17. A computer program product, comprising a computer program, the computer program being stored in a computer storage medium, the method for ray tracing of any one of claims 1 to 13 being implemented when a processor of a computer device reads the computer program from the computer storage medium and executes the computer program.
